# EUROPEAN PATENT APPLICATION

(11) **EP 2 387 183 A1**
(43) Date of publication of application: **16.11.2011**
(21) Application number: 11165431.5
(22) Date of filing: 10.05.2011
(51) Int. Cl.: H04L 12/56, H04Q 11/00

(54) **Technique for traffic recovery in multilayer communication networks**

(30) Priority: 13.05.2010 IL 20572410
(71) Applicant: ECI Telecom Ltd., Petach-Tikva 49517 (IL)
(72) Inventor: Wexler, Mishael Shimon, 99585 Beit Shemesh (IL)
(74) Representative: Modiano, Micaela Nadia

(57) **Abstract**

A method for recovery of a traffic flow being conducted via a communication line in a multi-layer communication network, the traffic flow comprising a Guaranteed traffic portion GT and a Best Effort traffic portion BET assigned to respective bandwidth resources of the line. The communication network comprising at least two network layers provided with respective traffic recovery mechanisms which utilize bandwidth resources such as time slots, wavelengths, physical links, logical links. The traffic flow may comprise traffic component(s) at different network layers, and the bandwidth resources of the traffic component(s) may be divided into GT and BET portions. The method comprises forming a shared pool of recovery resources, for all the layers in the line, from the bandwidth resources assigned to BET on all the layers. The method further comprises utilizing the shared pool of recovery resources for recovery of any of the traffic components of the traffic flow.

## Description

### Field of the invention

The present invention relates to a specific method of traffic recovery (traffic protection, traffic restoration) in a network incorporating a number of layers/protocols, for example in networks controlled by Generalized Multiprotocol Label Switching (**GMPLS**) protocol.

### Background of the invention

With the explosion of Internet traffic, network survivability has become a critical performance issue. There has been a recent interest in provisioning survivability in a common control and measurement plane, i.e., Generalized Multi-Protocol Label Switching (GMPLS), to reduce traffic recovery redundancy resulted by assigning different recovery mechanisms to different layers. Besides packet switching, GMPLS also supports the switching in the time, wavelength, waveband and space domains. It combines IP-based control plane techniques with the provisioning capabilities of diverse switches to support enhanced network survivability. The recovery mechanism of GMPLS provides SONET resiliency features, and thus the IP traffic could be placed directly over the WDM layer.

*Yanqiu Luo and Nirwan Ansari in "Prioritized Traffic Recovery over GMPLS Networks"* describe a prioritized traffic recovery model, classifying traffic by service classes and assigning to the classes a specific recovery scheme. For example, traffic may belong to so-called Gold, Silver or Bronze priority traffic which comprise delay sensitive or throughput sensitive traffic; and may belong to the best effort traffic, protection of which is usually not guaranteed. The lower the priority, the longer recovery time is expected for that class of traffic. Resources for traffic protection can be shared between different classes, but they are not shared between different layers/technologies in the network.

US 6,940808 *"Adaptive rate traffic recovery mechanism for communication networks"* describes a traffic recovery method which uses a layer 1-adaptive rate protection scheme that compliments layer-3 restoration mechanisms. The protection scheme allocates less bandwidth to the traffic during the protection switching than during the normal operating conditions. Rate adaptation is effected by a new interface between the data equipment and the transport network, and the transfer rate is switched between two or more predetermined levels. The patent deals with adaptive rate in case of protection, but not with sharing of resources between layers in the network.

*Hyuncheol Kim et al in the paper "A multi-layer recovery scheme in ASN*/*GMPLS networks"* propose a method which aims at fast and efficient recovery of lightpaths in ASON (Automatically Switched Optical Neworks)/GMPLS networks. When Optical Network OTN incorporates automatic switching capabilities, it is named ASON. The main problem of modern ASON incorporating wavelength division multiplexing technology (WDM) for heavy traffic, is its survivability. The paper describes a hierarchical multi-layer recovery for fast and coordinated restoration in ASN/GMPLS, focusing on so-called Reverse Shared Risk Link Groups (RSRLGs). The core of the solution is to use the SRLG concept to provide as many working and backup light-paths as possible.

### Object and Summary of the Invention

There is a long felt need in a solution which would simply and effectively allow sharing recovery resources between various layers of the network so as to allow the maximal and fastest possible recovery for traffic in multilayer networks.

Before starting to describe the idea, we would like to remind the terms and abbreviations used in the present specification:
GMPLS - Generalized Multi-Protocol Label Switching
WDM - Wavelength Division Multiplexing technology
SONET/SDH - Synchronous Optical NETwork (for USA, Canada)/Synchronous Digital Hierarchy (for Europe) - two close systems of digital transmission via optical networks;
TDM - Time Division Multiplexing technology
OTN - Optical Transport Network
MPLS - Multi Protocol Label Switching
VCAT - Virtual Concatenation or Virtual Concatenated Containers (a way of transmitting in parallel of a number of data streams/containers in SDH or SONET network);
LCAS - Link Capacity Adjustment Scheme; a method to dynamically increase or decrease the bandwidth of virtual concatenated containers.
MS-SPRing - Multiplex Section-Shared Protection Ring, technique for protecting traffic in ring networks.
xSTP - a group of, or anyone from the group of various Spanning Tree Protocols for protecting traffic in mesh networks;
FRR - Fast ReRouting; one of effective mechanisms for traffic protection in MPLS networks;
ERP/G.8032 - Ethernet Ring Protection, one of effective mechanisms for traffic protection in Ethernet rings, described in the ITU-T Standard Recommendation G.8032.
G.8031 - Ethernet Linear Protection Switching mechanism described in the ITU-T Standard recommendation G.8031.

The above object can be achieved by providing a method for recovery of a traffic flow being conducted via a communication line in a multilayer communication network, the traffic flow comprising Guaranteed traffic portion GT and Best Effort traffic portion BET assigned to respective bandwidth portions (called traffic resources or bandwidth resources) of said line, wherein
- the communication network comprising at least a lowest and a highest layers selected from a first non-exhaustive list (comprising SDH/SONET, OTN, WDM, MPLS, Ethernet), said layers being provided with respective traffic recovery mechanisms selected from a second non-exhaustive list (comprising an LCAS-like and at least one of the following: FRR, xSTP, ERP, G.8031), said mechanisms utilizing traffic/bandwidth resources selected from a third non-exhaustive list (comprising time slots, wavelengths/channels, physical links, logical links),
- the traffic flow comprising one or more traffic components respectively associated with one or more said layers, at least one of the traffic components having its assigned bandwidth resources (bandwidth) divided into GT and BET portions,
the method being characterized
by forming a shared pool of recovery resources, for all said layers in said line, from the bandwidth resources (i.e., from equivalent bandwidth) assigned to BET on all said layers (and from remaining bandwidth, if still remains),
by utilizing said shared pool of recovery resources for recovery of any traffic component of the traffic flow in case of bandwidth loss in the line.

The term "bandwidth resources" will be used intermittently with the term " traffic resources " in the present description.

Actually, the GT and BET traffic, assigned to respective bandwidth resources can utilize the same physical resources, the assignment means logical bandwidth assignment.

More specifically, the traffic component of the traffic flow may be multiplexed traffic at one of the layers, said multiplexed traffic utilizing a group of bandwidth resources, wherein each of the bandwidth resources of the group being assigned either to GT or to BET, forming at least a GT portion and optionally a BET portion of the multiplexed traffic;
the method being further characterized
by performing the following steps whenever bandwidth in said communication line is lost at least partially and the multiplexed traffic is affected at least at its BET portion:
a) for recovery of the BET portion of the multiplexed traffic, utilizing available resources from the shared pool of recovery resources in said line and/or in an alternative line, (for recovering the damaged multiplexed traffic at a lower layer by a traffic recovery mechanism of said layer: for example recovering VCAT traffic at the TDM layer by LCAS mechanism, and for example under a condition that, even if no resources are available in said shared pool, the affected multiplexed traffic will keep itself without recovery as far as a predetermined threshold/minimal portion of said multiplexed traffic remains untouched,)
b) if the GT portion is affected, activating one or both of the following:
   - protecting said GT portion by pre-provisioned resources in one or more alternative lines, (by activating a traffic recovery mechanism of a next layer higher than the layer of the multiplexed traffic);
   - restoring said GT portion using the shared pool of recovery resources in one or more alternative lines, (by utilizing a traffic recovery mechanism of the layer of the multiplexed traffic).

It should be explained that the shared resources of the line (which are called recovery resources) serve traffic of any of the mentioned layers; resources of a higher layer traffic are usually translated into (or represented by) resources of lower layer. For example, Layer-2 resource of a VCAT combined traffic flow consists of Layer-1 timeslots (SONET/SDH/OTN time-slots).

Preferably, the minimal threshold portion of the multiplexed traffic is its assigned GT portion.

It is understood, that if a line looses bandwidth, BET resources suffer first, while GT resources survive on the account of the remaining bandwidth. The steps a) and b) can be performed one after another, but can be made simultaneously.

If the GT portion is affected and recovery resources are found in the shared pool of an alternative line, which resources are capable of accommodating the affected part of the GT portion, the method may comprise shifting the GT portion from the protection resources occupied according to step b) to said found recovery resources, thereby utilizing the traffic recovery mechanism of a lower layer.

Further, it is also possible that some resources (say, timeslots) of the affected GT portion will be restored by using shared pool of BE traffic of alternative link(s), and some affected GT resources will be recovered by protection (i.e., by utilizing pre-provisioned resources in GT of alternative link(s).

As mentioned, the traffic flow should be understood as comprising at least one traffic component (which sometimes can be called a traffic service), having its assigned bandwidth divided into GT and BET portions. Such traffic components may exist at one or more protocol layers. For example, this at least one component may be the multiplexed traffic component.

The multiplexed traffic component should be understood as traffic which is multiplexed/demultiplexed at a lower layer of the network. For example such traffic may be VCAT using LCAS recovery mechanism. Another multiplexed traffic may be a VCAT-like traffic such as ODU flex in OTN networks; other similar examples can be found. These types of traffic may use dynamic bandwidth recovery mechanisms similar to LCAS.

The mentioned shared resources are formed for all the layers together, as a common pool. The shared resources of the line are actually its bandwidth resources, thereby they form a common pool of shared bandwidth for all layers of the traffic flow in the line.

In our preferred case, the lowest layer carries, by a number of TDM timeslots, a number of parallel streams of at least one VCAT traffic flow and utilizes LCAS protection mechanism for allocating recovery resources for the VCAT traffic.

The VCAT/LCAS mechanisms provide the ability to aggregate a number of time-slots into one logical interface comprising both GT and BET traffic.

The term "line" should be understood as covering a single link or a multi-link end-to-end logical link (sometimes path) in the network. The term "line" may therefore be used intermittently with the term "link" or "path" in the specification and claims.

In this description, the term "traffic recovery" or just "recovery" may comprise traffic restoration (which is usually performed by the lower level mechanism such as SNCP) and/or traffic protection (which is usually performed by higher level mechanisms such as FRR, xSTP, ERP, G.8031 etc.). The traffic protection mechanisms are usually associated with pre-provisioned resources for accommodating failed GT traffic, if required.

GMPLS controlled networks usually utilize RSVP-TE - Resource ReSerVation Protocol with Traffic-Engineering, being a Transport layer protocol designed to reserve resources in Traffic engineered networks. Though RSVP works on IP layer, it also controls a set of protocols comprising SDH/SONET, OTN, etc. and presents information about available bandwidth resources.

It should be emphasized that in case that no shared recovery resources are available in said link at a specific layer, the method (for recovery of said traffic flow) supposes performing the above steps to utilize alternative shared recovery resources existing in an alternative suitable communication line.

Obviously, it is simpler to start any step of the method with its own link (the link which has suffered from the loss of bandwidth); however, the method does not preclude that the search for recovery resources is started at another link at the same layer. Only if it is impossible to find the recovery resources at that layer, and the VCAT traffic suffers from excessive loss of bandwidth (lower than the predetermined threshold allows), the method moves - i.e., starts applying its mentioned steps - to a higher layer, to seek for shared recovery resources there. Actually, the use of the higher layer may already mean activation of traffic protection/data protection (and not traffic restoration) mechanisms, namely protection mechanisms such as FRR, xSTP, ERP/G.8032, G.8031, etc.

At any of the layers there may be one or more thresholds for handling GT/BT of different service(s) at that layer. At least at one of the layers, at least one traffic component (in addition to the multiplexed service) may be divided into GT and BET, provisioned with pre-assigned bandwidth resources and provided with at least one threshold of minimal required (GT or GT+) resources (required to be active, available, on). But all these "services" are independent from one another, do not form any aggregated thresholds and act in the pool according to: the principle "first come first take", different priorities, any combination of the latter two, etc.

The mentioned partial loss of bandwidth in a VCAT/LCAS logical link may be caused by some failure in another link, and/or pre-empting of traffic having a higher priority from another link, for example due to protection mechanisms, etc.

A complete fault of a communication link means full loss of its bandwidth. In this case, the proposed method will look for recovery resources at any layer of the traffic which took place via the completely failed link, and will start immediately from an alternative link/path, i.e. in its shared recovery resources assigned/provisioned for restoration/protection of the discussed traffic flow. In our preferred example, when the link totally fails, the process will immediately start from an alternative link, by using a recovery mechanism at the lowest layer (with LCAS or LCAS-like support for link capacity adjustment) on the alternative link, to utilize the shared recovery resources there.

In case of a complete fault of a communication line, the method may utilize any protection mechanism mentioned formerly (FRR, xSTP, etc.) as a traffic recovery mechanism at the suitable layer at an alternative line, in order to utilize the shared recovery resources of said alternative line. The meaning is that such a protection mechanism is not obligatory applied to a pre-provisioned bandwidth portion within GT traffic of the alternative line. If such bandwidth is not pre-provisioned, or due to another reason (for example, due to priorities), the method may utilize a protection mechanism on the shared recovery resources of the alternative line.

The shared resources of the line/link are actually its bandwidth resources, thereby they form a common pool of shared bandwidth for all layers of the traffic flow. They can be distributed between services requiring bandwidth (say, for compensating some loss in the multiplexed traffic, of for any other service) either on the basis "first come first take", or on the basis of priorities which can preliminarily be agreed about, or any combination of both.

The method thereby
a) allows utilizing recovery mechanisms first at the lower layers in the network (i.e. on the same plurality of network links forming the network, using fast low level traffic recovery mechanisms - restoration mechanisms), and then at the higher layers, using the higher layers' protection mechanisms. However, both of the recovery mechanisms may act concurrently and independently.
b) allows dynamically utilizing the shared recovery resources for lower and higher traffic layers, and between one or more links/paths. For example, in case of a partial fault of a link, the method may find recovery SDH resources (the lowest layer resources) at the same link, but may simultaneously go and find MPLS (higher level) recovery resources at an alternative link, if such are provided.
c) allows optimizing time of traffic recovery by selecting suitable thresholds for using the shared recovery resources at each of said layers, and preferably by performing the most part of the recovery at the lowest layer (SDH/SONET), since the lowest layer usually provides the fastest traffic recovery.

The method preferably allows utilizing the shared recovery resources for recovery of the BET traffic at any of said at least two layers by first utilizing the remaining portion of bandwidth of the own line, and then by utilizing at least a portion of the shared BET bandwidth portion of that specific line/alternative line.

The most widely used combination of the layers can be found in a GMPLS - controlled network and comprises an SDH/SONET GMPLS controlled layer and an MPLS GMPLS controlled layer. The preferred version of the method therefore comprises utilizing all available recovery resources (in the form of free timeslots) at the SDH/SONET layer using LCAS algorithm, wherein the border of utilization is stated in advance by selecting a threshold of "the must" recovery of GT (if damaged) of the SDH/SONET layer. If the problem is not resolved at the lower layer, the traffic will be protected at the MPLS layer, by using recovery resources (logical links) at the MPLS layer, if still remaining in the shared recovery resources. If resources remain, at least some BET services may be recovered (say, beginning from the lowest level), or just BW of any desired service may be broadened. In the course of regular operation, the bandwidth remaining in the link and not assigned to any of the traffic types of various layers, can be used for broadening bandwidth of GT or BET, - preferably of the guaranteed traffic having higher priority.

The Best Effort traffic (BET) at any layer may further comprise prioritized traffic which may actually define another threshold - a threshold of the minimal required bandwidth for the BET at this layer, per each specific service.

It should be kept in mind that the method discusses recovery/protection for BET at any layer, provided that resources for recovering GT (if damaged) of that layer have already been allocated/found. Indeed, one has to satisfy requirements of GT at all the layers, and only then give resources for recovery of BET.

There is also provided a software product enabling application of the above-described method to GMPLS-controlled networks. The software product, preferably, should form part of the GMPLS control system, thus improving it.

The proposed software product comprises computer implementable instructions and/or data for carrying out the method according to the above description, which are stored on an appropriate computer readable storage medium so that the software is capable of enabling operations of said method when used in a computer system.

### Brief description of the drawings

The invention will be further described with reference to the following non-limiting examples, in which:
**Fig. 1a, 1b, 1c** illustrates three exemplary, non-limiting combinations of traffic layers which may exist in a modern telecommunication network and be controlled by GMPLS.
**Fig. 2a** illustrates an example of schematic distribution of a link bandwidth as a distribution of its recovery resources.
**Fig. 2b** illustrates an example of schematic distribution of resources for a specific component of a traffic flow.
**Fig. 3a** shows a schematic exemplary portion of the network built according to scheme 1b, for further illustrating (in Figs 3b to 3d) how lower layer traffic recovery can be performed according to the invention, before invoking any higher level recovery.
**Fig. 3b** shows how bandwidth(recovery) resources are distributed in links of the end-to-end path of the network portion.
**Fig. 3c** illustrates how the bandwidth resources (recovery resources) can be utilized according to the invention, in case of a partial fault of link 1-2 in Fig. 3.
**Fig. 3d** illustrates how the bandwidth resources can be utilized according to the invention, in case of a complete fault of link 2-3.
**Fig. 4** illustrates a schematic flow chart of an exemplary algorithm for performing the proposed traffic recovery in a multi-layered network.

### Detailed description of the invention

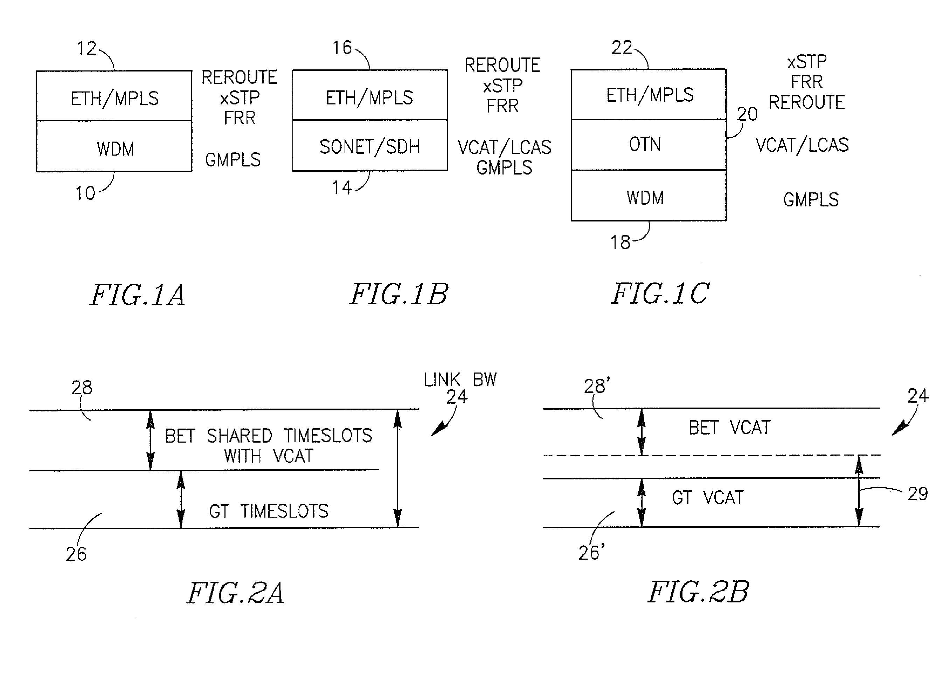

**Fig. 1a** schematically shows a network (or a network section) comprising a lower layer traffic (protocol) being the WDM traffic(protocol) 10, where bandwidth recovery resources are wavelengths. The WDM layer is controlled by GMPLS which is a restoration mechanism for WDM and operates all recovery resources of the WDM optical links.

An upper layer 12 is an Ethernet and/or MPLS layer controlled by protection/rerouting mechanisms such as xSTP, FRR, other Rerouting techniques which start operating only when the guaranteed traffic service (see Fig. 2) at the lower layer is damaged. The recovery resources of the layer 12 are logical and physical paths which any way catch bandwidth resources (in the form of wavelengths) of the network. The present invention will further teach how these resources can be managed for both layers by GMPLS modifed by the present invention. To modify the GMPLS, we propose developing an additional software product responsible for managing resources in a common pool of shared resources.

The lower, GMPLS controlled layer may be, for example an OTN or WDM layer.

**Fig. 1b** illustrates another combination of a lower, SONET/SDH layer 14 of traffic, and an upper layer 16 of Ethernet and/or MPLS. The recovery mechanisms of the layer 16 may be one or more of those indicated for the layer 12 in Fig. 1a. Recovery mechanisms in the layer 14 are, for example, GMPLS and LCAS for VCAT flows in the SONET/SDH network. Recovery resources of the layer 14 are timeslots and the bandwidth of the network is divided, by timeslots, between recovery resources of layer 14 and layer 16.

**Fig. 1c** schematically illustrates yet another example of a network (network section) where traffic is composed of three layers: a lowest WDM layer 18 where bandwidth/recovery resources are wavelength or channels and the recovery mechanism is GMPLS, an upper OTN layer 20 where the resources are timeslots, and the highest layer 22 (Eth/MPLS) which is similar to 16 and 12.

According to the invention, the bandwidth/recovery resources are first utilized at layer 18 up to a threshold, pre-selected per traffic component.

When resources (WDM channels/wavelengths) of the lowest layer are exhausted, recovery mechanisms of the upper layer OTN can be activated and thus LCAS for VCAT or other recovery mechanisms of OTN can be used, for recovery/restoration of the traffic at the OTN layer.

Similarly, when the recovery mechanisms of OTN 20 are exhausted, protection mechanisms of layer 22 may be activated.

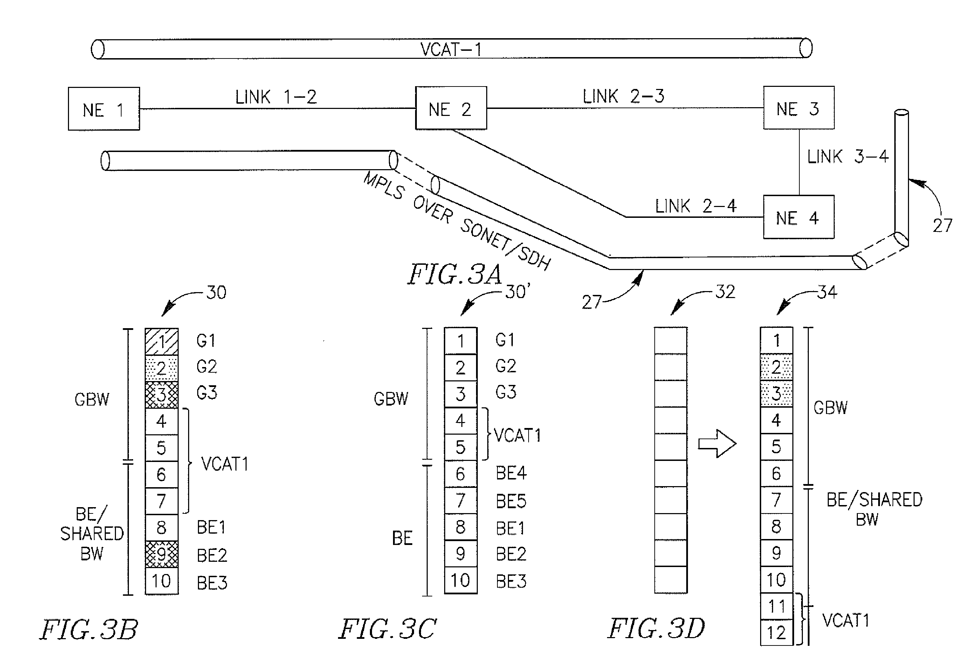

**Fig. 2a** shows how bandwidth is shared in a specific communication link (logical link, line) which is shown as its total bandwidth 24 (link's BW). The link carries traffic which includes guaranteed TDM traffic GT 26 and best effort TDM traffic BET 28. In this case, the traffic recovery resources are timeslots. Let in this specific example, the BET portion of the wavelength comprises a number of timeslots which carry some of VCAT containers. The BET timeslots, and the remaining timeslots - if still remain non-occupied (not shown) form our shared recovery resources of the TDM layer of the link. The GT part 26 usually comprises some resources which are pre-provisioned for upper layer protection of traffic from another link(will be shown in more details in Fig. 3b)

**Fig. 2b** illustrates exemplary distribution of resources for a specific traffic component (service), for example for a VCAT traffic of the entire traffic flow via the link. The reference numerals 24', 26', 28' mark bandwidth portions for that specific service. A dotted line 29 shows a pre-determined threshold of mandatory ("must") bandwidth for the VCAT service to still operate, which threshold usually coincides with the border line between 28' and 26', but sometimes may differ for various reasons. For example, in case the threshold is higher than the GT resources of VCAT, the "must" bandwidth may include one or more BET timeslots.

**Fig. 3a** illustrates an end to end communication path between a network element NE1 and a network element NE3, via a network element NE2. The working path between NE1 and NE3 comprises a link 1-2 and a link 2-3. An exemplary VCAT-1 service is shown as an MPLS Layer 2 logical-link 25 passing from NE1 to NE3. Bandwidth resources of the VCAT-1 traffic consist of a number of Layer 1 TDM timeslots which will be shown in Figs 3b- 3d. Let the communication path also comprises one or more Layer 1 links, formed by timeslots forming SONET/SDH data flow(s). It is understood that a physical link exists, represented just by a number of timeslots.

There is a bypass section protecting the link 2-3 via a network element NE4; that bypass section comprises links 2-4 and 4-3.

Let a lower layer TDM SONET/SDH traffic as well as the VCAT-1 traffic are carried over the working path NE1-NE3. In case of a fault in the link 1-2, protection for the traffic (i.e., recovery at a higher, MPLS layer) is pre-provisioned via links 2-4 and 3-4 and is shown in the form of a tunnel/logical link 27 (MPLS over SONET/SDH). Resources for such traffic protection are pre-provisioned in the GT portion of links 2-4 and 3-4 .

**Figs 3b-3d** illustrate schemes of lower layer traffic resources, though some of them form higher layer traffic resource ( such, for example, as logical links of VCAT).

**Fig. 3b** illustrates how the BW 30 (schematically presented as ten TDM timeslots) of link 1-2 are distributed between various services when the link operates properly and its BW is untouched. Let the same distribution of resources exists for link 2-3 of the end-to-end path. The Guaranteed bandwidth (GT or GBW) catches five timeslots, from which two slots (slots 4 and 5) are assigned to two component data streams of a VCAT-1 service, and three slots are assigned to TDM Guaranteed services G1,G2, G3 (Layer 1 traffic). Among these three timeslots, G2 may be pre-provisioned for higher layer protection of traffic carried by another link (not shown), and G3 may belong to another VCAT service (say, VCAT-2).

In this example, VCAT-1 occupies four timeslots; the remaining two VCAT-1 components utilize two timeslots (slots 6 and 7) in the shared, Best Effort BE portion of the link bandwidth (BW). The remaining three timeslots are occupied by TDM best effort services BE1,BE2, BE3, wherein BE2 is assigned as the second component of VCAT-2 traffic. Note that both GT and BET traffic are physically multiplexed on all time-slots but logically GT and BET bandwidths are separated.

In an alternative example, the BW resources/recovery resources 30 may be not timeslots, but wavelengths/channels in a WDM traffic layer.

**Fig. 3c** schematically shows what may happen in the link 1-2 if the link suffers from a partial BW loss (the BW is schematically shown as 30'). In this situation, firstly the BET is affected. If BE timeslots 6, 7 of the VCAT-1 components disappear (or become occupied by some higher priority traffic, shown as BE4, BE5 which has been routed to link 1-2 due to protection, recovery, etc.), the GMPLS recovery mechanism should firstly try finding recovery resources in the Best Effort shared pool of recovery resources - among the remaining timeslots 8, 9, 10. (It may be considered as restoration at a lower layer, just by assigning a higher priority to traffic to be protected, to catch these slots from BE of another link.) In case they are not available for recovery of the VCAT-1 traffic (say, also disappeared or pre-empted by other traffic), and no resources of the same layer are available at other links (not shown in this example), the VCAT-1 service will comply with its minimal BW provided in the Guaranteed portion of the link BW, and no protection will be invoked. Let us assume that in this example the pre-selected threshold of the VCAT-1 traffic is equal to the two timeslots of the GT. Such a situation will remain in balance until the moment the guaranteed traffic in the link 1-2 is forced over its pre-determined threshold of BW. If such happens, protection mechanisms at higher layers will be invoked. Example of such a situation will be shown with reference to the next drawing.

**Fig. 3d** schematically shows BW 32 of link 2-3, to illustrate how the proposed method operates if there is a total failure (total BW loss) in link 2-3, for example due to a fiber cut. One can see that the table of time slots of link 2-3 is empty. Let us discuss what will be done with the VCAT-1 service. In this case, VCAT-1, which must arrive from NE1 to NE3, will have no bandwidth at all, and since the guaranteed traffic is affected deadly, recovery of the traffic (at the lower layer) and/or data protection (at the higher layer such as MPLS, Ethernet) will be looked for in alternative links. Let in this example, recovery for the guaranteed traffic carried over link 2-3 is somehow pre-provisioned in links 2-4 and 4-3 or possibly, in other links which are not shown. For example, the VCAT-1 service will attempt to obtain, in links 2-4 and 4-3, at least two time slots (for the guaranteed portion of the VCAT-1 traffic) for its operation (according to the invention, by using the proposed software product and by activating the higher layer mechanism of protection ). This attempt is schematically illustrated by the BW 34 of the link 2-4. It comprises 12 timeslots; let slots 11 and 12 of the BE bandwidth thereof may be pre-empted, for example for recovery of the two guaranteed slots of the VCAT-1 service from link 2-3 which will have quite high priority in this case, or even for recovery of BE slots of the VCAT-1. (Such use of slots 11-12 would be recovery/restoration of VCAT-1 at a lower layer, in case there is no pre-provisioned protection). However, link 2-4 may in advance comprise some slots in the GT portion (say, slots 2 and 3) pre-provisioned for protection of the guaranteed portion of VCAT-1 on link 2-3 (see schematic logical tunnel 27 of Layer 2 in Fig. 3a, which utilizes resources of the physical link 2-3. It should be kept in mind that VCAT is Layer 2 logical-link which may be transmitted by MPLS over SONET/SDH). These slots may be temporarily used by traffic which is actually BE traffic of link 2-4, and such BE traffic will be dropped if the protection is invoked.

According to the proposed method, while deciding whether the traffic of link 2-3 can be recovered at a lower layer by using shared recovery resources of the same link 2-3 and alternative links 2-4 and 4-3, data protection (a higher layer recovery) may be invoked. In practice, if timeslots in the GT (GBW) of link 2-4 are pre-provisioned for protection of link 2-3, these timeslots will most probably be immediately used for their purpose (to accommodate GT slots of VCAT-1). The BE slots of the link 2-4, if freely available, will be used for the BE slots of VCAT-1 evacuated from link 2-3 (in case of entire fault).

In this example, the traffic services which belong to BET of link 2-3, will be recovered only in case there is available bandwidth (recovery resources) in alternative links, wherein the available bandwidth should be understood as either free bandwidth or bandwidth presently occupied with traffic having priority lower than priority of BET of the failed link.

In case that, any time later, the check of shared resources in the own link/in alternative links shows that the problem could be resolved without utilizing the data protection, the protected traffic may be "shifted back", i.e., the traffic recovery may be utilized at the lower layer, thus freeing the pre-provisioned resources for local BE traffic. In other words, if the situation changes and shared pools of resources occur to have available resources, the data protection may be fully or partially replaced by the lower layer recovery.

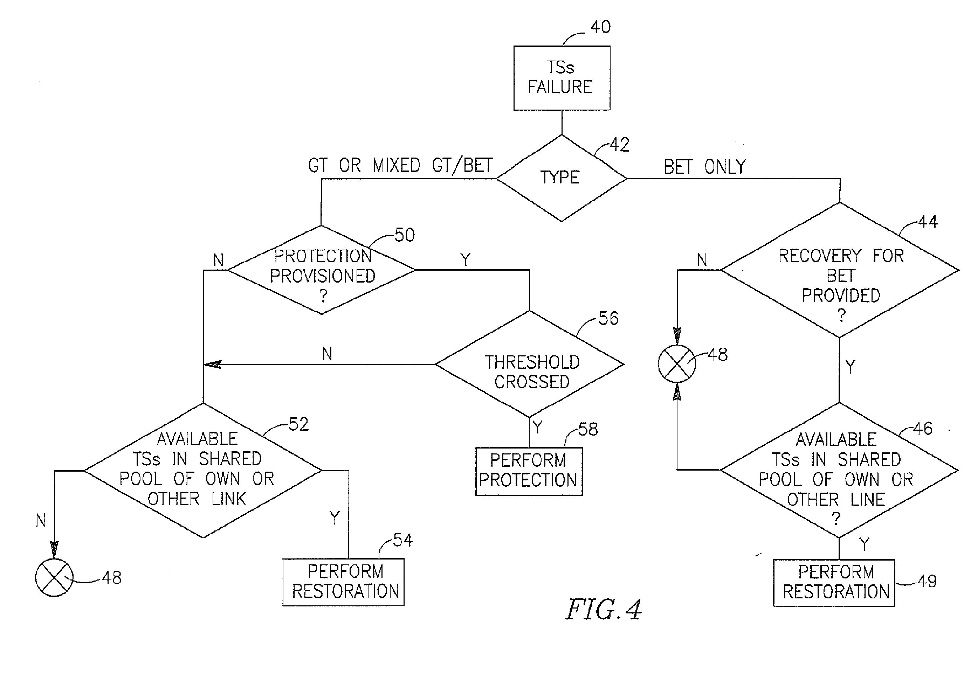

**Fig. 4** illustrates a schematic flow chart for recovery of a traffic flow divided into a GT portion and a BET portion (for example, a VCAT traffic).

Block 40 - failure of a TDM timeslot in a line (say, the bandwidth loss is in progress). Block 42 - checking, whether the failed slot belongs to BET, GT services or mixed GT/BET services traffic (e.g. using VCAT/LCAS controlled as logical-link).

Block 44 - If the slot is for BE traffic service, and traffic recovery for such BET may in principle be provided (i.e., the traffic recovery mechanism of that layer should try to recover such a service), block 46 should check the shared pool of resources of the line.

If traffic recovery is not provided/promised for that service, or there are no available timeslots in the shared resources, the BET service will be just dropped (block 48). If there are available resources in the shared pool of the own or other line, traffic restoration will be performed (block 49).

Block 50 - if the failed timeslot was serving a GT service or mixed GT/BET services traffic, the method should check whether a data protection is provisioned for it. If not, the method will try looking for any available timeslots in shared pools of traffic resources of the same link (which is unlikely, if GT timeslot has already failed) or of alternative link(s). If available resources are found, traffic restoration for the failed GT/ GT&BET timeslot may be performed (block 54).

If protection is pre-provisioned, but the required threshold of a multiplexed traffic flow (say, the VCAT traffic flow) is not yet crossed (block 56), the failed timeslot may still be restored at a lower layer (blocks 52, 54). The threshold (minimal) portion of the VCAT traffic is usually equal to the GT portion of that traffic, but theoretically they may differ. If the threshold is crossed (block 56), than the method should immediately perform data protection at an alternative line (block 58), by evacuating traffic from the failed timeslots of mixed GT/BET services traffic to suitable pre-provisioned timeslots at the alternative line. It should be noted the proposed method also allows applying protection mechanisms on shared recovery resources of the alternative line, so block 58 should be understood as utilizing pre-provisioned GT timeslots and/or timeslots from the shared pool of the alternative line. Note that the pure GT service can be treated as a specific case of the mixed GT/BET traffic having "zero" BET value. In this case every failure causes crossing of the threshold.

It should be appreciated that the proposed method may be modified and various modifications thereof should form part of the invention as defined by the general claims which follow.

## Claims

1. A method for recovery of a traffic flow being conducted via a communication line in a communication network, the traffic flow comprising a Guaranteed traffic portion GT and a Best Effort traffic portion BET assigned to respective bandwidth resources of said line, wherein
- the communication network comprising at least a lowest and a highest layers selected from a first non-exhaustive list comprising SDH/SONET, OTN, WDM, MPLS, Ethernet, said layers being provided with respective traffic recovery mechanisms selected from a second non-exhaustive list comprising an LCAS-like and at least one of the following: FRR, xSTP, G.8032, G.8031, said mechanisms utilizing bandwidth resources selected from a third non-exhaustive list comprising time slots, wavelengths, physical links, logical links,
- the traffic flow comprising one or more traffic components respectively associated with one or more said layers, at least one of the traffic components having its bandwidth resources divided into GT and BET portions,
the method being **characterized by** forming a shared pool of recovery resources, for all said layers in said line, from the bandwidth resources assigned to BET on all said layers, and
by utilizing said shared pool of recovery resources for recovery of any of the traffic components of the traffic flow.

2. The method according to Claim 1, wherein said one traffic component is multiplexed traffic at one of the layers, said multiplexed traffic utilizing a group of bandwidth resources, wherein each of the bandwidth resources of the group being assigned either to GT or to BET, thereby forming at least a GT portion of the multiplexed traffic and possibly a BET portion thereof;
the method being further **characterized by** performing the following steps whenever bandwidth in said communication line is lost at least partially and the multiplexed traffic is affected at least at its BET portion:
a) for recovery of the BET portion of the multiplexed traffic, utilizing available resources from the shared pool of recovery resources in said line and/or in an alternative communication line,
b) if the GT portion is affected, activating one or both of the following:
- protecting said GT portion by pre-provisioned resources in one or more alternative lines,
- restoring said GT portion using the shared pool of recovery resources in one or more alternative lines.

3. The method according to Claim 1 or 2, wherein the multiplexed traffic is VCAT traffic, and wherein the lowest layer utilizes LCAS protection mechanism or alike for allocating recovery resources for the VCAT traffic.

4. The method according to any one of the preceding Claims, wherein in case that no shared recovery resources are available in said line at a specific layer, the method comprises utilizing alternative shared recovery resources existing in an alternative suitable communication line.

5. The method according to any one of the preceding claims, comprising using, in case of a complete fault of the communication line, a protection mechanism selected from a list comprising FRR, xSTP, G.8032, G.8031, as a traffic recovery mechanism at the suitable layer at an alternative line in order to utilize the shared recovery resources of said alternative line.

6. The method according to any one of the preceding claims, wherein at least one additional multiplexed traffic service is divided into GT and BET, provisioned with assigned bandwidth resources and provided with a threshold of minimal available resources required for said traffic service.

7. The method according to any one of the preceding claims, wherein said network is a GMPLS-controlled network comprising an SDH/SONET/OTN/WDM GMPLS controlled layer, and an MPLS/Ethernet layer controlled by protection/rerouting mechanisms from a list comprising FRR, xSTP, G.8032, G.8031.

8. A software product comprising computer implementable instructions and/or data for carrying out the method according to any one of Claims 1 to 7, stored on an appropriate computer readable storage medium so that the software is capable of enabling operations of said method when used in a computer system.
